# EUROPÄISCHE PATENTSCHRIFT

(11) **EP 2 117 968 B1**
(45) Veröffentlichungstag und Bekanntmachung des Hinweises auf die Patenterteilung: **15.01.2014**
(21) Anmeldenummer: 08707242.7
(22) Anmeldetag: 24.01.2008
(51) Int. Cl.: B65G 1/137

(54) **KOMMISSIONIERSYSTEM MIT REGALTRANSPORTEINHEIT UND VERFAHREN ZUM BETREIBEN EINES SOLCHEN SYSTEMS**
PICKING SYSTEM WITH A RACK TRANSPORT UNIT AND METHOD FOR OPERATING SUCH A SYSTEM
SYSTÈME DE PRÉPARATION DE COMMANDE COMPRENANT UNE UNITÉ DE TRANSPORT DE RAYONNAGES ET PROCÉDÉ D'UTILISATION D'UN TEL SYSTÈME

(30) Priorität: 24.01.2007 DE 102007005561
(43) Veröffentlichungstag der Anmeldung: 18.11.2009
(73) Patentinhaber: SSI Schäfer Noell GmbH Lager-und Systemtechnik, 97232 Giebelstadt (DE)
(72) Erfinder: SCHAEFER, Gerhard, 57290 Neunkirchen (DE)
(74) Vertreter: Witte, Weller & Partner
(86) Internationale Anmeldenummer: PCT/EP2008/000531
(87) Internationale Veröffentlichungsnummer: WO 2008/089980

(56) Entgegenhaltungen:
- EP-A2- 1 452 462
- WO-A-2005/113389
- WO-A1-2007/134840
- DE-A1- 10 313 577
- US-A- 3 028 658

## Beschreibung

Die vorliegende Erfindung betrifft ein Kommissioniersystem und ein Verfahren zum Betreiben desselben, wobei viele Verpackungseinheiten zwischen einem Palettenlager und einem Kommissionierpuffer bzw. -lager transportiert werden müssen.

Das 54(3) EPÜ-Dokument WO 2007/134840 A1 offenbart ein Regallager sowie ein Kommissionierverfahren.

Im Stand der Technik ist gemäß der DE 295 13 943 U1 eine Transport- und Bereitstellungsvorrichtung für Behälter bekannt. Dort wird eine Transport- und Bereitstellungsvorrichtung für Behälter offenbart, die von einem Behälterlagerregal zu einem Verbauungsort zu transportieren sind, an dem die Behälter bereitgestellt und im Behälter befindliche Teile dem Behälter entnommen und verbaut werden. Ein typisches Anwendungsgebiet stellt die Automobilindustrie dar, wobei bei Fertigungslinien bspw. die Innenausstattung gemäß Kundenwunsch zu einer entsprechenden Karosserie transportiert werden muss. Die bekannte Transport- und Bereitstellungsvorrichtung wird also bspw. bei einer Fließbandmontage eingesetzt, bei der Baugruppen oder dergleichen in Behältern in einem Hochregallager untergebracht sind und zu einem Montageort gebracht werden müssen.

Diese Behälter werden von einem Regalbediengerät aus einem Regallager geholt. Das Regalbediengerät gibt den geholten Behälter an eine Auslagerförderbahn ab. Ein Transport der Behälter außerhalb des Lagers erfolgt über eine bekannte Behälterfördertechnik.

Ein Einzeltransport von Behältern über die Behälterfördertechnik ist aufgrund langer Transportwege langwierig. Deshalb schlägt die DE 295 13 943 U1 eine Transport- und Bereitstellungsvorrichtung für Behälter vor, wobei die Vorrichtung ein Regal für mehrere Behälter umfasst, in das die Behälter jeweils einzeln einführbar sind und aus welchem sie einzeln entnehmbar sind. Die Vorrichtung weist an ihrer Unterseite einen palettenähnlichen Unterbau und/oder Rollen bzw. Räder auf. Die Vorrichtung weist ferner ein Rastermaß auf, welches an ein Rastermaß des Behälterlagers angepasst ist, so dass die Behälter mittels dem Regalbediengerät direkt aus dem Lagerregal in die Vorrichtung, die auch "Rack" genannt wird, geladen werden kann. Die Standardbehältergröße beträgt 40 x 60 x 20 cm. Die Behälter werden mittels L-förmigen Auflagewinkeln seitlich in der Vorrichtung gehalten.

Vor kurzem haben Entwicklungen der Anmelderin zu einer Abkehr von einer Verwendung von Behältern beim Kommissionieren geführt. Gemäß einem neuen Konzept, welches von der Anmelderin der vorliegenden Erfindung ersonnen wurde, werden nunmehr Tablare anstatt Behältern als Ladehilfsmittel eingesetzt. (Einzel-)Tablare sind zwar allgemein bekannt. Neu an dem Konzept ist jedoch, dass die Tablare eine Aufnahmefläche aufweisen, die im Wesentlichen so groß wie die Fläche einer Palette, wie z.B. einer Euro-Palette (1200 x 800 mm), ist. Die Tablare werden dabei jeweils mit einer Palettenlage von Verpackungseinheiten bestückt. Die Paletten, von denen Palettenlagen heruntergenommen werden, werden bspw. in einem Hochregallager für Paletten gelagert.

Da eine Palettenlage von Verpackungseinheiten bis zu 250 kg wiegen kann, muss zum Transportieren der Tablare eine Palettenfördertechnik (Rollenbahn, Kettenförderer, usw.) verwendet werden. Die Verwendung einer Palettenfördertechnik reduziert jedoch den Durchsatz, d.h. die Anzahl von Tablaren, die pro Stunde zwischen einem Palettenlager und einem Kommissionierpuffer transportiert werden können. Die Kommissionierung selbst erfolgt aus dem Kommissionierpuffer.

Die offengelegte Patentanmeldung DE 103 13 577 A1 mit dem Titel "Automatisiertes System und Verfahren zum Lagern und Kommissionieren von Artikeln" offenbart ein automatisiertes Lagersystem zum Lagern und Kommissionieren von auf Eingangsladungsträgem, wie etwa Paletten, gelieferten Artikeln mit einer Einrichtung (Depalettierer) zur einzelnen Vereinzelung von Artikel-Packeinheiten. Ferner ist ein Tablarlager zum Lagern der einzelnen Packeinheiten auf Tablaren, eine Entnahme-Fördertechnik zur Entnahme und zur für die Beladung auf Auftrags-Ladungsträger sequenzierten Bereitstellung der Packeinheiten und eine Packstation zum Laden der Packeinheiten in einer definierten Beladesequenz auf Auftrags-Ladungsträger zum Transport beispielsweise mit einem Lkw vorgesehen.

Die europäische Patentanmeldung EP 1 452 462 A2 offenbart ein Kommissioniersystem, das aus einem Regallager zum Lagern von in Lagerbehältern befindlichen Artikeln sowie einen Kommissionierpufferbereich besteht, in welchem die Lagerbehälter auf Pufferplätzen bereitgestellt werden. In einer Regalgasse im Kommissionierpufferbereich ist ein Pickfahrzeug verfahrbar, welches bereitgestellte Lagerbehälter entsprechend Kommissionierauftrag sequenziert aufnimmt und über eine angeschlossene Fördertechnik einem Kommissionierplatz zuführt. Eine dort arbeitende Kommissionierperson kann die in den Lagerbehältern bereitgestellten Artikel entnehmen und in ergonomisch vorteilhafter Weise in ebenfalls bereitgestellte Auftragsbehälter umladen, ohne einen Fußweg zurücklegen zu müssen. Teilgefüllte Lagerbehälter werden durch das Pickfahrzeug wieder auf Pufferplätze im Kommissionierpufferbereich zurückgebracht. Durch die konsequente Umsetzung des "Ware-zum-Mann"-Prinzips könne Pick-Leistungen und Pick-Zuverlässigkeit bei gleichzeitiger Berücksichtiger ergonomischer Aspekte maximiert werden.

Die internationale Anmeldung WO 2007/134840 A1, die ein Dokument zum Stand der Technik gemäß Artikel 54(3) EPÜ darstellt, wird ein Kommissioniersystem mit einem Palettenlager, einem Tablarlager und einer Fördertechnik offenbart, wobei das Tablarlager als Kommissionierpuffer verwendet wird, um angeschlossene Kommissionierplätze mit Verpackungseinheiten zu versorgen, wobei im Tablarlager Tablare gelagert werden, die zuvor mit einer Palettenlage von Verpackungseinheiten beladen wurden und wobei die Fördertechnik angepasst ist, mit jeweils mit einer Palettenlage von Verpackungseinheiten beladener Tablare zu transportieren.

Es ist daher eine Aufgabe der vorliegenden Erfindung ein Kommissioniersystem vorzusehen, bei dem ein ausreichend hoher Transportdurchsatz von schweren, mit Palettenlagen beladenen Tablaren möglich ist. Ferner ist es eine Aufgabe ein entsprechendes Verfahren zum Betreiben eines solchen Kommissioniersystems bereitzustellen.

Diese Aufgaben werden durch ein Kommissioniersystem gemäß Anspruch 1 gelöst.

Ferner wird die Aufgabe durch ein Verfahren nach Anspruch 9 gelöst.

Durch den Einsatz einer Transporteinheit für Tablare lassen sich zusätzliche Palettenförderstrecken einsparen, die sich normalerweise zwischen dem Palettenlager und dem Tablarlager erstrecken müssten, um den erforderlichen Durchsatz von 1000 Tablaren pro Stunde und mehr zu erreichen. Ausgehend von einem herkömmlichen Durchsatz von 250 Tablaren pro Stunde müssten somit mindestens vier, vorzugsweise übereinander angeordnete, Palettenfördertechniken eingesetzt werden, um ausreichend Tablare von dem Palettenlager zum Tablarlager transportieren zu können. Das gleiche gilt natürlich auch für einen Rücktransport. Durch den Einsatz der Transporteinheit können mehrere Tablare mit einer Bewegung vom Palettenlager zum Tablarlager transportiert werden. Wird im Stand der Technik lediglich ein Tablar transportiert, können durch den Einsatz einer Transporteinheit gleichzeitig mehrere Tablare transportiert werden.

Ferner ist es bevorzugt, wenn des Weiteren eine Depalettiereinrichtung zum Umladen von einer Palettenlage aus Verpackungseinheiten auf leere Tablare vorgesehen ist.

Auch ist es von Vorteil, wenn ferner eine Umsetzeinrichtung vorgesehen ist, die derart zwischen der Depalettiereinrichtung und der Fördertechnik angeordnet ist, das (zeitlich) gerade mit einer Palettenlage beladene Tablare direkt in die Transporteinheit abgegeben werden können, wenn die Transporteinheit die Umsetzeinrichtung passiert.

Durch den Einsatz von Umsetzeinrichtungen muss die Depalettiereinrichtung leere Tablare nicht innerhalb der Transporteinheit selbst beladen bzw. zusätzliche Mittel aufweisen, mit denen leere Tablare außerhalb der Transporteinheit beladen und anschließend in die Transporteinheit gegeben werden. Durch das Vorsehen einer Umsetzeinrichtung können die Depalettiereinrichtung und die Fördertechnik räumlich voneinander getrennt werden. Die Depalettierung kann an einem anderen Ort stattfinden, als das Befüllen der Transporteinheiten. Der Weg zwischen der Depalettiereinrichtung und den Transporteinheiten kann z.B. mittels einer weiteren Fördertechnik zurückgelegt werden, die wiederum beladene Tablare an die Umsetzeinrichtung abgibt.

Vorzugsweise ist die Umsetzeinrichtung ein in vertikaler Richtung verfahrbarer Förderer oder eine horizontal und vertikal verfahrbare Lagermaschine.

Ein in vertikaler Richtung verfahrbarer Förderer lässt sich auf einfache Weise mit der weiteren Fördertechnik kombinieren. Beladene Tablare werden von der weiteren Fördertechnik auf den vertikalen Förderer transportiert, der anschließend in vertikaler Richtung höhenverstellt wird, um das beladene Tablar in ein vorbestimmtes Fach der Transporteinheit abzugeben. Umgekehrt kann mittels des vertikal verfahrbaren Förderers ein leeres Tablar aus der Transporteinheit entnommen und an die weitere Fördertechnik zur Beladung bei einer Depalettiereinrichtung abgegeben werden.

Alternativ kann eine horizontal und vertikal verfahrbare Lagermaschine eingesetzt werden. Solche Lagermaschinen werden von der Anmelderin der vorliegenden Anmeldung unter dem Produktnamen "Schäfer Quad Shuttle" (SQS) vertrieben. Ein SQS ist sowohl in horizontaler als auch in vertikaler Richtung verfahrbar und verfügt über ein oder mehrere Lastaufnahmemittel. In vertikaler Richtung können verschiedene Fächer, die übereinander angeordnet sind, einer Transporteinheit angefahren werden. In horizontaler Richtung können, falls nebeneinander angeordnete Tablarfächer in der Transporteinheit vorhanden sind, unterschiedliche Fächer der gleichen Transporteinheit angefahren werden. Ferner können auf diese Weise auch verschiedene Transporteinheiten mit Tablaren bestückt werden, vorausgesetzt die Transporteinheiten sind im Bereich der Reichweite des SQS hintereinander angeordnet. Mit Hilfe der horizontal und vertikal verfahrbaren Lagermaschine kann eine Sequenzierungsstufe implementiert werden, da die Lagermaschine nicht nur dazu in der Lage ist, ein Tablar in einer vorbestimmten Höhe abzugeben, sondern auch dazu in der Lage ist, unterschiedliche Transporteinheiten zu bestücken. Dies hat Auswirkung auf das Entladen der Transporteinheiten im Tablarlager.

Je weiter vorne - in Bezug auf eine Transportrichtung der Förderstrecke - eine Transporteinheit steht, desto schneller wird sie im Tablarlager ankommen, um das Tablarlager selbst wieder mit neuen Tablaren zu bestücken.

Gemäß einer weiteren bevorzugten Ausführungsform ist im Bereich der Depalettiereinrichtung eine Fördertechnikschleife angeordnet, um die Transporteinheit zum Beladen mit vollen Tablaren aus der Förderstrecke ausschleusen zu können und um dann die Transporteinheit zum Transportieren zum Tablarlager in die Förderstrecke einschleusen zu können.

Durch das Vorsehen von Fördertechnikschleifen im Bereich der Depalettiereinrichtungen wird ein Hauptfluss auf der Förderstrecke während eines Beladens und Entleerens der Transporteinheiten nicht gestört. Sobald eine Transporteinheit (erneut) mit Tablaren befüllt ist, kann sie in die (Haupt-)Fördertechnik zurückgeschleust werden, um zum Tablarlager transportiert zu werden. Diese Maßnahme erhöht wiederum den Durchsatz von Tablaren, die pro Stunde zwischen Palettenlager und Tablarlager transportiert werden können.

Gemäß einer besonderen Ausführungsform weist das Tablarlager eine Vielzahl von Lagerregalen auf, die über seitliche Vertikallifte mit Tablaren versorgt werden, wobei die Vertikallifte an Längsseiten der Lagerregale angeordnet sind.

Die Vertikallifte sind in Regalgassen des Tablarlagers angeordnet. Solche Regalgassen werden über Fördertechnikstiche mit Transporteinheiten versorgt. Die Fördertechnikstiche sind wiederum an die Hauptfördertechnik angeschlossen, so dass der Transport von Transporteinheiten auf der Fördertechnik ungestört durchgeführt werden kann. Ähnlich wie bei den vorerwähnten Förderschleifen erhöhen die Fördertechnikstiche somit den Durchsatz, da Staus vermieden werden.

Ferner ist es bevorzugt, wenn die Vertikallifte in ihrem Bereich ebenfalls über Fördertechnikschleifen an die Fördertechnikstiche angeschlossen sind, die wiederum an die Fördertechnik angeschlossen sind.

Durch diese Maßnahme erhöht sich wiederum der Durchsatz von Transporteinheiten in den Fördertechnikstichen, da auch dort Fördertechnikschleifen vorgesehen sind, die den "Verkehr" im Fördertechnikstich entspannen und Staus vermeiden.

Außerdem ist es bevorzugt, wenn ein Tablar eine Beladefläche aufweist, die im Wesentlichen einer Fläche eine Palette entspricht und wenn das Tablar eine Last von bis zu 250 kg tragen kann.

Insbesondere kann jede Transporteinheit in vertikaler Richtung mindestens vier beladene Tablare aufnehmen und in horizontaler Richtung vorzugsweise mehrere Tablare nebeneinander aufnehmen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig.1: zeigt eine schematische Draufsicht auf ein Kommissioniersystem gemäß der vorliegenden Erfindung;
- Fig. 2: zeigt eine perspektivische, schematische Ansicht eines Bereichs des Kommissioniersystems gemäß Fig. 1, in dem Transporteinheiten mit Tablaren bestückt werden;
- Fig. 3: zeigt eine perspektivische, schematische Ansicht in eine Regalgasse eines Tablarlagers, wie es im Kommissioniersystem gemäß der Fig. 1 enthalten ist; und
- Fig. 4: zeigt ein Flussdiagramm eines erfindungsgemäßen Verfahrens.

Die vorliegende Erfindung lässt sich hervorragend in das Konzept der Anmelderin integrieren, gemäß dem palettengroße Tablare mit jeweils einer Palettenlage von Verpackungseinheiten beladen werden, um in einem Kommissioniersystem eingesetzt zu werden, welches ähnlich wie ein herkömmliches Kommissioniersystem gehandhabt wird, das mit herkömmlichen Behältern betrieben wird.

Ein auf solche Tablare ausgelegtes Tablarlager wird in der deutschen Patentanmeldung DE 10 2006 025 620 A1 offenbart, deren Gesamtinhalt hier durch Bezugnahme integriert ist. Eine Regal-integrierte Packstation und ein Kommissionierverfahren dazu wird in der deutschen Patentanmeldung DE 10 2006 025 619 offenbart, deren Gesamtinhalt hier durch Bezugnahme integriert ist. Die mit Palettenlagen beladenen Tablare werden auch an separaten Packstationen benötigt, wie sie in der deutschen Patentanmeldung DE 10 2006 025 617 beschrieben sind, deren Gesamtinhalt durch Bezugnahme hier umfasst ist. Ein Verfahren, wie eine Kommissionieranlage mittels mit Palettenlagen beladenen Tablaren statt mit Behältern betrieben wird, ist in der deutschen Patentanmeldung DE 10 2006 025 618 beschrieben, deren Gesamtinhalt hier durch Bezugnahme darauf verwiesen wird.

Bei der Beschreibung der nachfolgenden Figuren werden gleiche Elemente mit den gleichen Bezugszeichen bezeichnet werden. Eine erfindungsgemäße Kommissionieranlage bzw. ein erfindungsgemäßes Kommissioniersystem wird allgemein mit 10 bezeichnet werden.

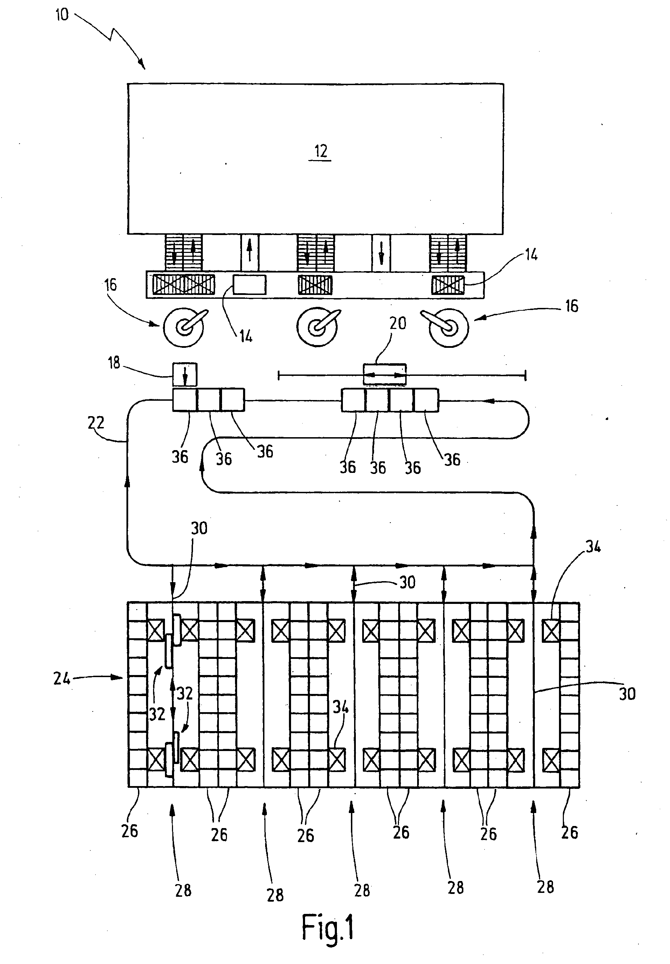

Das Kommissioniersystem 10 gemäß der Erfindung ist schematisch in Fig. 1 in einer Draufsicht dargestellt.

Das Kommissioniersystem 10 umfasst ein Palettenlager 12, in dem Paletten 14 gelagert sind, wobei in Fig. 1 geleerte Paletten als weiße Rechtecke und beladene Paletten 14 als dunkle Rechtecke dargestellt sind. Die Paletten 14 werden mittels Depalettiereinrichtungen 16 entladen, die wiederum Palettenlagen auf (hier nicht dargestellte) Tablare laden, die z.B. auf Umsetzeinrichtungen 18, 20 angeordnet sind.

Mittels einer (Haupt-)Fördertechnik 22 (durchgezogene Linie) werden die mit jeweils einer Palettenlage beladenen Tablare zu einem Tablarlager 24 transportiert. Das Tablarlager 24 dient als Kommissionierpuffer. Um einen Kommissionierauftrag abarbeiten zu können, werden im Tablarlager 24 gelagerte Tablare zu (hier nicht dargestellten) Packstationen bzw. Kommissionierplätzen transportiert, bei denen Verpackungseinheiten entnommen werden und auf Versandträger gepackt werden, um Kommissionieraufträge abzuarbeiten. Es versteht sich, dass die Fördertechnik 22 bei Nichtvorhandensein eines Palettenlagers 12 dieses auch nicht passiert. Die Fördertechnik 22 führt an einem Ort vorbei, wo (befüllte) Tablare aufgenommen werden können.

Das Tablarlager 24 ist explizit in der oben erwähnten deutschen Patentanmeldung beschrieben und umfasst eine Vielzahl von Regalen 26, die einfach oder Rücken-an-Rücken aufgestellt sind. Zwischen den Regalen 26, die eine Vielzahl von Lagerplätzen für Tablare aufweisen, befinden sich Regalgassen 28. Bei der hier in Fig. 1 gezeigten Ausführungsform verlaufen mittig angeordnete Fördertechnikstiche 30 längs der Regalgassen 28. Die Fördertechnikstiche 30 sind jeweils an die Fördertechnik 22 (Rollenbahn, Kettenförderer usw.) angeschlossen, um beladene Tablare, die von dem Palettenlager 12 kommen zur Einlagerung in die Regalen 26 aufzunehmen. Dazu sind an den Längsseiten der Regale 26 innerhalb der Regalgassen 28 seitliche Vertikallifte 34 vorgesehen. Für weitere Details wird auf die oben erwähnten Patentanmeldungen verwiesen.

Um mehr Tablare pro Stunde zwischen dem Palettenlager 12 und dem Tablarlager 24 fördern zu können, wobei keine zusätzlichen (Paletten-)Fördertechniken 22 vorgesehen werden sollen, werden sog. Transporteinheiten 36 verwendet.

Bei den Transporteinheiten 36 handelt es sich um "kleine Regaleinheiten", die ähnlich zu Segmenten der Regale 26 aufgebaut sind und zur Aufnahme von mehreren Tablaren ausgelegt sind. Die Transporteinheiten 36 weisen vorzugsweise einen Rahmen auf, an dem horizontal verlaufende Stützschienen in vorzugsweise unterschiedlichen Ebenen angeordnet sind, um mehrere Tablare übereinander aufnehmen zu können. Die Transporteinheiten 36 stellen idealerweise "kleine" Regale dar, die mehrere Lagerplätze aufweisen, die übereinander und/oder nebeneinander angeordnet sind. Es versteht sich, dass auch Transporteinheiten verwendet werden können, die lediglich nebeneinander angeordnete Lagerplätze aufweisen oder die mehrere Lagerplätze aufweisen, die wiederum in Spalten und Reihen angeordnet sind.

Die Transporteinheiten 36 sind so ausgestaltet, dass Tablare aufgenommen werden können, deren Grundfläche im Wesentlichen so groß ist wie eine Grundfläche der Paletten des Palettenlagers 12 ist, von denen Palettenlagen von Verpackungseinheiten (nicht dargestellt) auf die Tablare umgeladen werden. Insbesondere ist dabei zu berücksichtigen, dass einzelne Palettenlagen bis zu 250 kg schwer sein können, so dass der Rahmen der Transporteinheit 36 entsprechend auszulegen ist.

Ferner versteht es sich, dass neben Euro-Paletten (1200 x 800 mm) auch andere (Standard-)Palettenmaße verwendet werden können.

In Fig. 1 sind mehrere Transporteinheiten 36 dargestellt. Die Transporteinheiten 36 befinden sich hier im Bereich der Depalettiereinrichtungen 16, um mit Tablaren beladen zu werden. Dazu werden Paletten 14 aus dem Palettenlager 12 ausgelagert, vorzugsweise über Stiche, die wiederum mit einer Vorzone verbunden sind, die zwischen dem Palettenlager 12 und den Depalettiereinrichtungen 16 angeordnet ist. Die Depalettiereinrichtungen 16 entnehmen jeweils eine Palettenlage und setzen die Palettenlage auf leere Tablare, die auf den Umsetzeinrichtungen 18, 20 warten.

Es versteht sich, dass die Depalettiereinrichtung nicht verschwenkt werden muss, um eine Palettenlage umzusetzen. Es wäre gleichfalls möglich, eine Palettenlage bspw. lediglich kurz anzuheben, ein Leertablar darunter zu bewegen und anschließend die angehobene Palettenlage wieder abzusenken. Ein so beladenes Tablar könnte mittels einer geeigneten Fördertechnik zu den Umsetzeinrichtungen 18, 20 verbracht werden, um anschließend in leere Transporteinheiten 36 geladen zu werden.

Umgekehrt gilt, dass leere Tablare mittels der Umsetzeinrichtungen 18, 20 aus den Transporteinheiten entnommen werden können, insbesondere wenn diese von dem Tablarlager 24 mit Leertablaren zurückkehren. Auf diese Weise ist gewährleistet, dass es ständig zu einem Austausch von leeren und beladenen Tablaren zwischen dem Palettenlager 12 und dem Tablarlager 24 kommt.

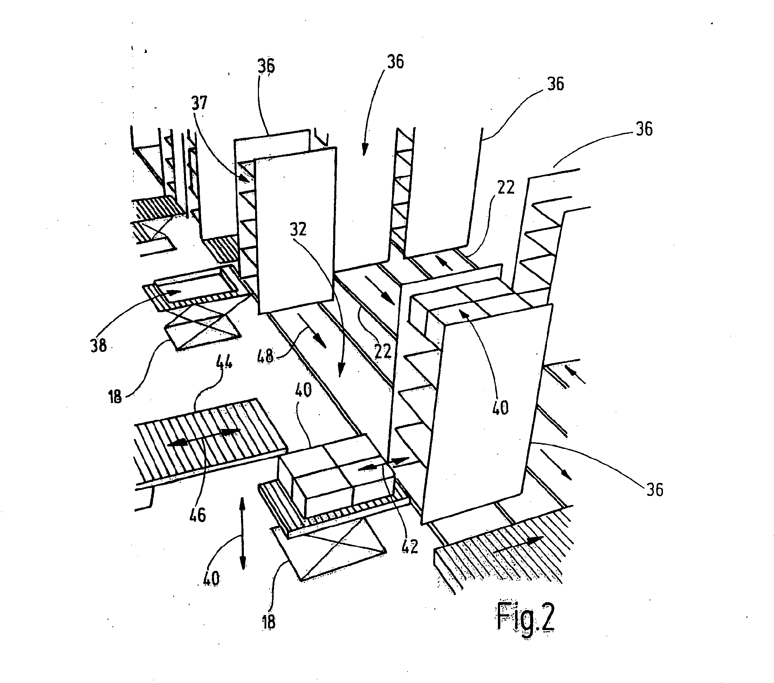

In Fig. 2 ist einen perspektivische, schematische Ansicht eines Bereichs in der Nähe der in Fig. 1 gezeigten Depalettiereinrichtungen 16 gezeigt.

In Fig. 2 sind deutlich drei parallel zueinander angeordnete Abschnitte einer Fördertechnik 22 zu erkennen. Eine Fluss- bzw. Bewegungsrichtung der Transporteinheiten 36 ist mittels dunkler Pfeile (vgl. z.B. Pfeil 48) dargestellt. Im rechten hinteren Bereich der Fig. 2 ist eine Rückflussstrecke der Fördertechnik 22 gezeigt, über die leere Transporteinheiten 36 von dem Tablarlager 24 zu den Depalettiereinrichtungen 16 transportiert werden. Der mittlere Abschnitt der Fördertechnik 22 wird in umgekehrter Richtung betrieben, vergleichbar zu dem Bereich, der in Fig. 1 der Umsetzrichtung 20 gegenüberliegt.

Abweichend von Fig. 1 ist in Fig. 2 neben der Hauptfördertechnik 22 eine Kommissionierschlcife bzw. ein Bahnhof 32 dargestellt, um Transporteinheiten 36 aus der Hauptfördertechnik 22 auszuschleusen. Dazu sind (nicht dargestellte) Ausschleusvorrichtungen vorgesehen. Nach einer erfolgten Ausschleusung können leere Fächer 37 der Transporteinheiten 36 mit beladenen Tablaren 38 bestückt werden, um anschlieβend durch (nicht dargestellte) Einschleusvorrichtungen in die Hauptfördertechnik 22 zurückbeschleust zu werden.

Die Bestückung der Transporteinheiten 36, die eine Vielzahl von Tablarfächern 37 aufweisen, erfolgt vorzugsweise über die vertikal verfahrbaren Förderer 18, die in Vertikalrichtung 40 höhenverstellbar sind. Eine Entnahme der und eine Bestückung mit Tablaren erfolgt in horizontaler Richtung, wie es mit einem Pfeil 42 in Fig. 2 angedeutet ist.

Im unteren Bereich der Fig. 2 ist eine weitere Fördertechnik 44 dargestellt, die eingesetzt werden kann, um beladene Tablare 38 von einem Beladungsort, wo die Depalettiereinrichtung 16 in der Nähe arbeitet, zur Umsetzeinrichtung 18 zu transportieren. Dazu wird der Umsetzförderer 18 in die gleiche Höhe wie die weitere Förderstrecke 44 verfahren, um das beladene Tablar 38 aufnehmen zu können. Anschließend wird der Umsetzförderer 18 in eine beliebige Höhe verfahren, in Fig. 2 bspw. abgesenkt, um ein vorbestimmtes Fach 37 der Transporteinheit 36 zu befüllen.

Nachdem die Transporteinheit 36 befüllt ist, kann sie mittels der Einschleuseinrichtung wieder an die Fördertechnik 22 abgegeben werden, um zum Tablarlager 24 transportiert zu werden.

Alternativ oder ergänzend zu den Vertikalförderern 18 können (nicht dargestellte) Lagermaschinen, wie z.B. SQS oder STS (Schäfer Tray System), die zum Handling von Tablaren ausgerüstet sind, eingesetzt werden. Eine Lagermaschine ist sowohl in vertikaler Richtung 40 als auch in horizontaler Richtung verfahrbar.

Angenommen mehrere Transporteinheiten 36 sind nebeneinander aufgereiht, um von den Umsetzeinrichtungen 18 bestückt zu werden. Mittels einer Lagermaschine können gleichzeitig unterschiedliche Transporteinheiten 36 bestückt werden. Dies ermöglicht eine Sequenzierung, d.h. hier kann die Reihenfolge der Tablare, wie sie in das Tablarlager 24 gelangen, geändert und beeinflusst werden. Tablare höherer Priorität können in Transporteinheiten 36 geladen werden, die näher an einer Einschleusvorrichtung angeordnet sind als andere Transporteinheiten 36. Auch kann die Verteilung von Tablaren in verschiedene Gassen (bzw. Regale) des Tablarlager 24 berücksichtigt werden. Wird z.B. eine artikelreine Palette aufgelöst, so resultiert dies in einer Vielzahl von Tablaren, die alle mit den gleichen Artikeln bestückt sind. Diese Tablare können dann auf unterschiedliche Transporteinheiten geladen werden, um unterschiedliche Gassen nur einmal anfahren zu müssen. Würde man eine Transporteinrichtung artikelrein beladen, so müssten mehrere Regal von dieser Transporteinheit angefahren werden, um eine gute Verteilung der Artikel im Tablarlager zu erhalten. Deshalb ist ein Artikelmix in den Transporteinheiten wünschenswert.

Es versteht sich, dass wenn kein Bahnhof 32 vorgesehen ist, die Sequenzierung auch direkt auf der Fördertechnik 22 möglich ist (vgl. Situation wie in Fig. 1).

Ferner ist festzustellen, dass es sich bei der Fördertechnik 22 der Fig. 2 um einen Kettenförderer handelt, der zum Transport von Paletten geeignet ist. Andere Arten von Palettenfördertechnik sind möglich. Alternativ könnte z.B. auch eine Rollenbahn eingesetzt werden. Die Fördertechnik 22 ist für den Transport schwerer Güter auszulegen.

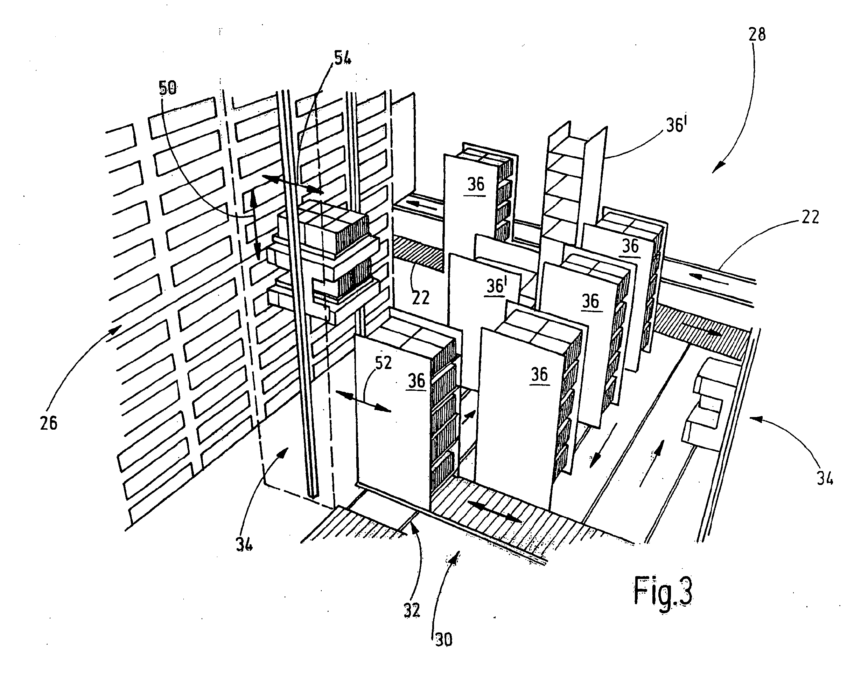

Fig. 3 zeigt schematisch eine perspektivische Ansicht in eine Regalgasse 28 (vgl. Fig. 1). Dabei blickt man von einem Inneren der Regalgasse 28 in Richtung eines äußeren Randes, wo die Fördertechnik 22 gefüllte Transporteinheiten 36 anliefert, um sie in Fördertechnikstiche 30 abzugeben, wo optional Fördertechnikschleifen 32 vorgesehen sein können.

Im linken Bereich der Fig. 3 ist eine Längsseite eines Regals 26 dargestellt. An die Längsseite des Regals 26 grenzt einer der Vertikallifte 34. Der Vertikallift 34 verfügt über zumindest ein Lastaufnahmemittel, mit dem Tablare aus Lagerplätzen und aus Tablarfächern 37 entnommen bzw. an diese abgegeben werden können. Der Vertikallift 34 ist in Vertikalrichtung 50 verfahrbar und tauscht in Horizontalrichtung Tablare mit dem Regale 26 (vgl. Pfeil 54) und den Transporteinheiten 36 (vgl. Pfeil 52) aus.

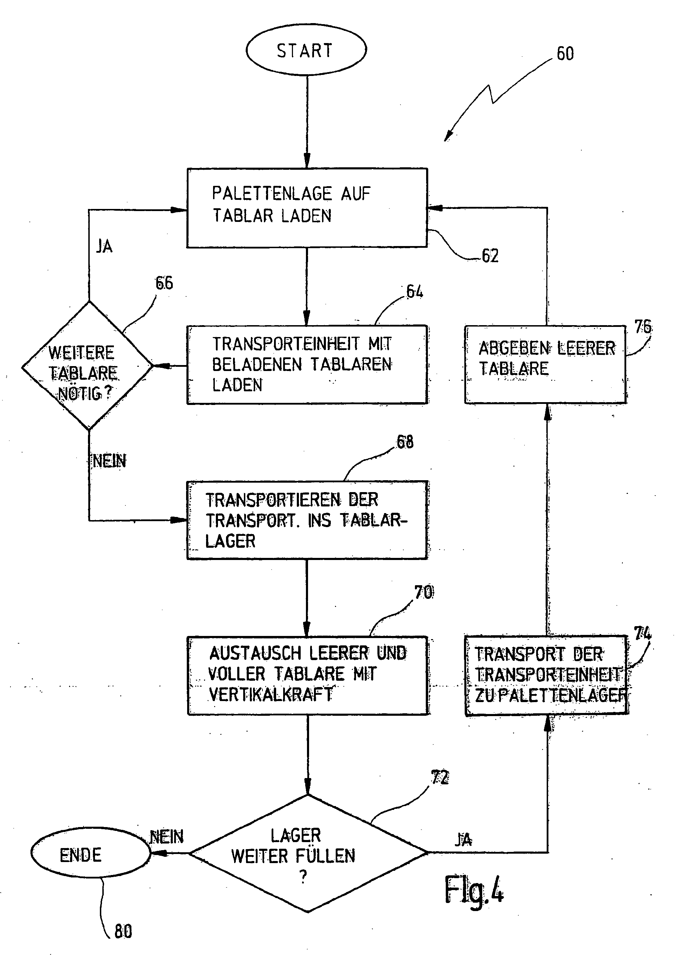

In Fig. 4 ist ein Flussdiagramm eines Verfahrens gemäß der vorliegenden Erfindung gezeigt.

In einem ersten Schritt 62 werden Palettenlagen auf leere Tablare geladen, um anschließend in einem Schritt 64 in Transporteinheiten geladen zu werden. Anschließend wird in einem Schritt 66 abgefragt, ob weitere Tablare benötigt werden, um die Transporteinheit zu laden. Falls Ja, kehrt man zum Schritt 62 zurück. Falls Nein, wird die Transporteinheit mit den beladenen Tablaren in einem Schritt 68 ins Tablarlager transportiert. In einem Schritt 70 werden leere und volle Tablare mittels der Vertikallifte ausgetauscht. Stellt sich in einem weiteren Schritt 72 heraus, dass weitere Verpackungseinheiten benötigt werden, so wird die Transporteinheit mit leeren Tablaren in Richtung des Palettenlagers zurücktransportiert (vgl. Schritt 54) und die leeren Tablare werden zur erneuten Beladung abgegeben (vgl. Schritt 76). Werden im Schritt 72 keine weiteren Verpackungseinheiten benötigt, endet das Verfahren (vgl. Schritt 80).

## Patentansprüche

1. Kommissioniersystem (10) mit:
einem Palettenlager (12), vorzugsweise in Form eines Hochregallagers, das als Vorratslager für eine Vielzahl von verschiedenen Verpackungseinheiten (40) verwendet wird, die im Palettenlager (12) sortenrein auf Paletten (14) gelagert sind;
einer Depalettiereinrichtung (16) zum Umladen von jeweils einer Palettenlage aus Verpackungseinheiten (40) auf leere Tablare (38);
einem Tablarlager (24), das als Kommissionierpuffer verwendet wird, um angeschlossene Kommissionierplätze mit Verpackungseinheiten (40) zu versorgen, wobei im Tablarlager die Tablare (38) gelagert sind, die zuvor jeweils mit einer Palettenlage von Verpackungseinheiten (40) beladen wurden;
einer Fördertechnik (22), die die mit jeweils einer Palettenlage von Verpackungseinheiten beladene Tablare (38) zum Tablarlager transportiert; und
mindestens einer Transporteinheit (36) für die Tablare (38), die eine Vielzahl von Tablarfächern (37) aufweist und die ausgebildet ist, eine Vielzahl der mit jeweils einer Palettenlage beladenen Tablaren aufzunehmen, und die mittels der Fördertechnik (22) zum Tablarlager (24) transportiert wird.

2. Kommissioniersystem nach Anspruch 1, das ferner eine Umsetzeinrichtung (18, 20) aufweist, die derart zwischen der Depalettiereinrichtung (16) und der Fördertechnik (22) angeordnet ist, das die gerade mit einer Palettenlage beladene Tablare (38) direkt in die Transporteinheit (36) abgegeben werden können, wenn die Transporteinheit (36) auf der Förderstrecke (22) die Umsetzeinrichtung (18, 20) passiert.

3. Kommissioniersystem nach Anspruch 2, wobei die Umsetzeinrichtung (18, 20) ein in vertikaler Richtung verfahrbarer Förderer (18) oder eine horizontal und vertikal verfahrbare Lagermaschine (20) ist.

4. Kommissioniersystem nach einem der vorhergehenden Ansprüche, wobei im Bereich der Depalettiereinrichtung (16) eine Fördertechnikschleife (32) angeordnet ist, um die mindestens eine Transporteinheit (36) zum Beladen aus der Förderstrecke (22) ausschleusen zu können und um die mindestens eine Transporteinheit (36) zum Transportieren zum Tablarlager (24) in die Förderstrecke (22) einschleusen zu können.

5. Kommissioniersystem nach einem der vorhergehenden Ansprüche, wobei das Tablarlager (24) eine Vielzahl von Lagerregalen (26) aufweist, die über seitliche Vertikallifte (34) mit den Tablaren (38) versorgt werden, wobei die Vertikallifte (34) an Längsseiten der Lagerregale (26) angeordnet sind.

6. Kommissioniersystem nach Anspruch 4 und 5, wobei die Vertikallifte (34) in ihrem Bereich ebenfalls über Fördertechnikschleifen (32) an Fördertechnikstiche (30) angeschlossen sind, die wiederum an die Fördertechnik (22) angeschlossen sind.

7. Kommissioniersystem nach einem der vorhergehenden Ansprüche, wobei jedes der Tablare (38) eine Beladefläche aufweist, die im Wesentlichen einer Fläche einer Palette entspricht und wobei jedes der Tablare (38) eine Last von bis zu 250 kg tragen kann.

8. Kommissioniersystem nach einem der vorhergehenden Ansprüche, wobei die mindestens eine Transporteinheit (36) in vertikaler Richtung mindestens vier der beladenen Tablare (38) aufnehmen kann, und in horizontaler Richtung vorzugsweise mehrere der Tablare (38) nebeneinander aufnehmen kann.

9. Verfahren (60) zum Versorgen eines Tablarlagers (24), das eine Vielzahl von Tablaren (38) aufnehmen kann, mit Tablaren (38), die jeweils mit einer Palettenlage von Verpackungseinheiten (40) beladen werden, mit den folgenden Schritten:
Umladen einer Palettenlage auf ein leeres Tablar (38);
Verbringen (62) einer Vielzahl von so beladenen Tablaren (38) in eine Transporteinheit (36);
Transportieren (68) der Transporteinheit mittels einer Fördertechnik (22) zu einem Übergabepunkt bei dem Tablarlager; und
Umladen (70) der Vielzahl von Tablaren (38) aus der Transporteinheit (36) in seitliche Vertikallifte (34), die an Längsseiten von Regalen (26) des Tablarlagers (24) angeordnet sind.

10. Verfahren nach Anspruch 9, wobei das Verbringen (62) der beladenen Tablare (38) in die Transporteinheit (36) mittels eine vertikal und horizontal verfahrbaren Lagermaschine (20) erfolgt, die zwischen der Fördertechnik (22), die die Transporteinheit (36) zum Tablarlager (24) transportiert, und einer Depalettiereinrichtung (16) angeordnet ist.

11. Verfahren nach Anspruch 10, wobei mehrere Transporteinheiten (36) im Bereich der Lagermaschine (20) hintereinander zum Beladen mit beladenen Tablaren (38) angeordnet werden, und wobei die Lagermaschine (20) die Transporteinheiten (36) sequenziert belädt.

12. Verfahren nach einem der Ansprüche 9 bis 11, wobei die Transporteinheiten (36) zur Beladung mit den Tablaren (38) in Förderschleifen (32), die mit der Fördertechnik (22) verbunden sind, eingeschleust werden.

## Claims

1. An order-picking system (10) comprising:
particularly a pallet warehouse (12), particularly in terms of a high-bay warehouse, which is used as a supply warehouse for a plurality of, different packing units (40) which are stored on pallets (14) in the pallet warehouse (12) by one sort only;
a depalletizing device (16) for rehandling respectively a pallet layer of packing units (40) on empty trays (38); a tray warehouse (24), which is used as an order-picking buffer in order to feed order-picking stations connected thereto with packing units (40), wherein the trays (38) are stored in the tray warehouse which have been loaded with respectively a pallet layer of packing units (40) beforehand;
a conveyor (22) transporting the trays (38), which are respectively loaded with a pallet layer of packing units to the tray warehouse; and
at least one tray-transport unit (36), which comprises a plurality of tray compartments (37) and which is adapted to receive a plurality of trays each of which is loaded with a pallet layer, and which is transported to the tray warehouse (24) by means of the conveyor (22).

2. The order-picking system of claim 1, further comprising a shifting device (18, 20) which is arranged between the depalletizing device (16) and the conveyor (22) such that the trays (38), which have just been loaded with a pallet layer, can be delivered directly to the transport unit (36), if the transport unit (36) on the conveyor (22) passes the shifting device (18, 20).

3. The order-picking system of claim 2, wherein the shifting device (18, 20) is a conveyor (18) being displaceable in a vertical direction, or is a storage machine (20) being displaceable horizontally and vertically.

4. The order-picking system of any of the proceeding claims, wherein a conveyor loop (32) is arranged in the region of the depalletizing device (16), in order to allow the transport unit (36) to be discharged from the conveyor line (22) for the purpose of loading the same, and to allow the transport unit (36) to be introduced in the conveyor line (22) for the purpose of transporting same towards the tray warehouse (24).

5. The order-picking system of any of the proceeding claims, wherein the tray warehouse (24) comprises a plurality of warehouse racks (26) being supplied with the trays (38) via laterally arranged vertical elevators (34), wherein the vertical elevators (34) are arranged along longitudinal sides of the storage racks (26).

6. The order-picking system of claims 4 and 5, wherein the vertical elevators (34) are connected to conveyor branches (30) via conveyor loops (32) in region thereof, which in turn are connected to the conveyor (22).

7. The order-picking system of any of the proceeding claims, wherein each of the trays (38) comprises a loading area which substantially corresponds to an area of a pallet, and wherein each of the trays (38) can carry a load up to 250 kg.

8. The order-picking system of any of the proceeding claims, wherein the at least one transport unit (36) can receive in a vertical direction at least four loaded trays (38), and in a horizontal direction preferably a number of trays (38) which are arranged side-by-side.

9. A method (60) for feeding a tray warehouse (24), which can receive a plurality of trays (38), with trays (38), which are respectively loaded with a pallet layer of packing units (40), comprising the steps of:
rehandling a pallet layer on an empty tray (38);
moving (62) a plurality of so-loaded trays (38) into a transport unit (36);
transporting (68) the transport unit to a handover point at the tray warehouse by means of a conveyor (22); and
rehandling (70) the plurality of trays (38) from the transport unit (36) into laterally arranged vertical elevators (34) which are arranged along longitudinal sides of racks (26) of the tray warehouse (24).

10. The method of claim 9, wherein the moving (62) of the loaded trays (38) into the transport unit (36) happens by means of a storage machine (20) which is vertically and horizontally displaceable, the storage machine being arranged between the conveyor (22), which transports the transport unit (36) to the tray warehouse (24), and a depalletizing device (16).

11. The method of claim 10, wherein several transport units (36) are arranged in the region of the storage machine (20) one behind the other for being loaded with the loaded trays (38), and wherein the storage machine (20) loads the transport unit (36) in a sequenced manner.

12. The method of any of the claims 9 to 11, wherein the transport units (36) are introduced in conveyor loops (32) for being loaded with the trays (38), the conveyor loops (32) being connected to the conveyor (22).

## Revendications

1. Système de préparation de commande (10) avec:
un magasin de palettes (12), de préférence sous la forme d'un magasin à rayonnages hauts, qui est utilisé comme magasin de réserve pour une multiplicité d'unités d'emballage différentes (40), qui sont entreposées dans le magasin de palettes (12) par type sur des palettes (14);
un dispositif de dépalettisation (16) pour transborder chaque fois une couche de palette composée d'unités d'emballage (40) sur des plateaux vides (38);
un magasin de plateaux (24), qui est utilisé comme tampon de préparation de commande, pour alimenter des postes de préparation de commande raccordés avec des unités d'emballage (40), dans lequel les plateaux (38), qui ont été préalablement chargés chaque fois avec une couche de palette en unités d'emballage (40), sont entreposés dans le magasin de plateaux;
un mécanisme de transport (22), qui transporte les plateaux (38) respectivement chargés avec une couche de palette d'unités d'emballage (40) vers le magasin de plateaux; et
au moins une unité de transport (36) pour les plateaux (38), qui présente une multiplicité d'alvéoles (37) et est configurée pour contenir une multiplicité de plateaux chargés respectivement avec une couche de palette, et qui est transportée jusqu'au magasin de plateaux (24) au moyen du mécanisme de transport (22).

2. Système de préparation de commande selon la revendication 1, qui présente en outre un dispositif de transfert (18, 20), qui est disposé entre le dispositif de dépalettisation (16) et le mécanisme de transport (22), de telle manière que les plateaux (38) juste chargés avec une couche de palette puissent être délivrés directement dans l'unité de transport (36), lorsque l'unité de transport (36) franchit le dispositif de transfert (18, 20) sur la section de transport (22).

3. Système de préparation de commande selon la revendication 2, dans lequel le dispositif de transfert (18, 20) est un transporteur (18) déplaçable en direction verticale ou une machine d'entreposage (20) déplaçable horizontalement et verticalement.

4. Système de préparation de commande selon l'une quelconque des revendications précédentes, dans lequel une boucle (32) du mécanisme de transport est disposée dans la région du dispositif de dépalettisation (16), pour pouvoir exclure de la section de transport (22) ladite au moins une unité de transport (36) à charger et pour pouvoir inclure dans la section de transport (22) ladite au moins une unité de transport (36) à transporter jusqu'au magasin de plateaux (24).

5. Système de préparation de commande selon l'une quelconque des revendications précédentes, dans lequel le magasin de plateaux (24) présente une multiplicité de rayonnages d'entreposage (26), qui sont chargés avec les plateaux (38) au moyen d'élévateurs verticaux latéraux (34), dans lequel les élévateurs verticaux (34) sont disposés sur des côtés longitudinaux des rayonnages d'entreposage (26).

6. Système de préparation de commande selon la revendication 4 et 5, dans lequel les élévateurs verticaux (34) sont raccordés dans leur région, également au moyen de boucles (32) du mécanisme de transport, à des tables (30) du mécanisme de transport qui sont de nouveau raccordées au mécanisme de transport (22).

7. Système de préparation de commande selon l'une quelconque des revendications précédentes, dans lequel chacun des plateaux (38) présente une face de chargement, qui correspond essentiellement à une face d'une palette et dans lequel chacun des plateaux (38) peut porter une charge maximale de 250 kg.

8. Système de préparation de commande selon l'une quelconque des revendications précédentes, dans lequel ladite au moins une unité de transport (36) peut accepter en direction verticale au moins quatre des plateaux chargés (38) et peut accepter en direction horizontale de préférence plusieurs des plateaux (38) les uns à côté des autres.

9. Procédé (60) pour alimenter un magasin de plateaux (24), qui peut contenir une multiplicité de plateaux (38), avec des plateaux (38) qui ont été respectivement chargés avec une couche de palette en unités d'emballage (40), comportant les étapes suivantes:
transborder une couche de palette sur un plateau vide (38);
transférer (62) une multiplicité de plateaux (38) ainsi chargés dans une unité de transport (36);
transporter (68) l'unité de transport au moyen d'un mécanisme de transport (22) à un point de transfert près du magasin de plateaux; et
transborder (70) la multiplicité de plateaux (38) de l'unité de transport (36) dans des élévateurs verticaux latéraux (34), qui sont disposés sur des côtés longitudinaux de rayonnages (26) du magasin de plateaux (24).

10. Procédé selon la revendication 9, dans lequel le transfert (62) des plateaux chargés (38) dans l'unité de transport (36) est effectué au moyen d'une machine d'entreposage (20) déplaçable verticalement et horizontalement, qui est disposée entre le mécanisme de transport (22), qui transporte l'unité de transport (36) jusqu'au magasin de plateaux (24), et un dispositif de dépalettisation (16).

11. Procédé selon la revendication 10, dans lequel plusieurs unités de transport (36) sont disposées dans la région de la machine d'entreposage (20), l'une derrière l'autre, pour le chargement avec des plateaux chargés (38), et dans lequel la machine d'entreposage (20) charge en séquence les unités de transport (36).

12. Procédé selon l'une quelconque des revendications 9 à 11, dans lequel les unités de transport (36) sont incluses, pour le chargement avec les plateaux (38), dans des boucles de transport (32), qui sont raccordées au mécanisme de transport (22).
